(19) Europäisches Patentamt
European Patent Office
Office européen des brevets

(11) **EP 4 026 676 A1**

(12) **EUROPEAN PATENT APPLICATION**
published in accordance with Art. 153(4) EPC

(43) Date of publication:
**13.07.2022 Bulletin 2022/28**

(21) Application number: 20860805.9

(22) Date of filing: 27.08.2020

(51) International Patent Classification (IPC):
**B29B 11/16** (2006.01)    **C08K 7/06** (2006.01)
**C08L 101/00** (2006.01)    **D01F 9/22** (2006.01)

(52) Cooperative Patent Classification (CPC):
**B29B 11/16; C08K 7/06; C08L 101/00; D01F 9/22**

(86) International application number:
**PCT/JP2020/032339**

(87) International publication number:
**WO 2021/044935 (11.03.2021 Gazette 2021/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 04.09.2019 JP 2019161064

(71) Applicant: **Toray Industries, Inc.**
**Tokyo, 103-8666 (JP)**

(72) Inventors:
• **OKUDA, Haruki**
  **Iyo-gun, Ehime 791-3193 (JP)**
• **TANAKA, Fumihiko**
  **Iyo-gun, Ehime 791-3193 (JP)**
• **WATANABE, Jun**
  **Iyo-gun, Ehime 791-3193 (JP)**

(74) Representative: **Mewburn Ellis LLP**
**Aurora Building**
**Counterslip**
**Bristol BS1 6BX (GB)**

(54) **RESIN COMPOSITION AND MOLDED ARTICLE**

(57)    Provided is a resin composition including carbon fibers and a thermoplastic resin, in which the carbon fibers have a tensile elastic modulus E of 350 to 500 GPa, and the tensile elastic modulus E (GPa) and a loop fracture load A (N) satisfy the relationship of $A \geq -0.0017 \times E + 1.02$. This resin composition not only has a high moldability into a member of a complex shape by injection molding, but also can yield a molded article having excellent flexural modulus and excellent impact characteristics.

EP 4 026 676 A1

**Description**

Technical Field

The present invention relates to a resin composition containing carbon fibers suitable for injection molding, from which a member having a high flexural modulus and a complex shape can be molded.

Background Art

Carbon fiber-reinforced composites, particularly carbon fiber-reinforced plastics exhibit excellent mechanical properties and thus have been widely used in recent years as lightweight materials that replace members to which light metals such as aluminum are conventionally applied. However, carbon fiber-reinforced plastics are, in order to allow them to exhibit their excellent mechanical properties, often used in the state of fibers having a length of at least several millimeters regardless of whether the fibers are continuous or non-continuous and, in such cases, there is a problem that it is difficult to shape the fibers into a complex shape. Meanwhile, when injection molding that provides excellent shapeability into a complex shape is applied to a thermoplastic resin containing carbon fibers, the resulting molded article generally has a low flexural modulus and does not have satisfactory mechanical properties as an alternative to light metals.

For improvement in the flexural modulus of such an injection-molded article of a thermoplastic resin containing carbon fibers, mainly, a method of increasing the content ratio of the carbon fibers, a method of molding the thermoplastic resin in such a manner to leave the carbon fibers long, and a method of increasing the tensile elastic modulus of the carbon fibers are commonly employed. These methods exert substantially independent effects and thus have been studied separately.

Citation List

Patent Literature

With regard a method of increasing the tensile elastic modulus of carbon fibers, there are cases where a type of product that has a high tensile elastic modulus is simply selected from commercially available carbon fibers. For example, by using carbon fibers having a tensile elastic modulus of 295 to 390 GPa in combination with a specific aromatic amide, the flexural modulus of a molded article is improved to 39 GPa when the content ratio of the carbon fibers is 40% by mass (Patent Literature 1).

In addition, a method of improving the tensile elastic modulus of carbon fibers from about 240 GPa, which is a generally used level, to 290 GPa in combination with a specific polyamide resin has been proposed (Patent Literature 2).

Further, by using carbon fibers having a tensile elastic modulus of 390 to 450 GPa in combination with a polyphenylene sulfide resin, the flexural modulus of a molded article is improved to 37 GPa when the content ratio of the carbon fibers is 31% by mass (Patent Literature 3).

Moreover, a technology of using a pitch-based carbon fiber having a tensile elastic modulus of 860 GPa in combination with a polyacrylonitrile-based carbon fiber has been proposed (Patent Literature 4).

[Patent Literature 1] JP 2006-1965A
[Patent Literature 2] JP 2018-145292A
[Patent Literature 3] JP 2017-190426A
[Patent Literature 4] JP 2019-26808A

Summary of Invention

Technical Problem

However, the technologies proposed in the aforementioned Patent Literature have the following problems.

In Patent Literature 1, although an effect of improving the flexural modulus of a molded article is observed, the effect was extremely small according to the results that the flexural modulus of the molded article was 32 GPa when general-purpose carbon fibers having a tensile elastic modulus of 240 GPa were used, and a mere 1.2-fold improvement in the flexural modulus of the molded article was obtained even when the tensile elastic modulus of the carbon fibers was increased by 1.6 fold. In addition, the use of carbon fibers having a tensile elastic modulus of 375 GPa had a small effect in that the flexural modulus of the resulting molded article was 39 GPa, probably because the carbon fibers had a low crystallization parameter determined by Raman spectroscopy, i.e. a high carbonization temperature, and had a small single-fiber diameter.

In Patent Literature 2, the flexural modulus of a molded article was only improved from 33 GPa to 35 GPa when the content ratio of the carbon fibers was 45% by mass.

In Patent Literature 3, probably because the carbon fibers had a low crystallization parameter determined by Raman spectroscopy, i.e. a high carbonization temperature, and had a small single-fiber diameter, a satisfactory result was not obtained in terms of the flexural modulus of a molded article with respect to the amount of the carbon fibers used, not only when the content ratio of the carbon fibers was 31% by mass, but also when the content ratio was increased to 56% by mass.

In Patent Literature 4, when the pitch-based carbon fiber having a high tensile elastic modulus was used alone, a satisfactory result was not obtained as the flexural modulus of a molded article was improved only to 29 GPa at best.

As described above, prior arts conceived an idea of using general-purpose carbon fibers having a high tensile elastic modulus; however, they do not offer any suggestion with regard to a carbon fiber suitable for injection molding.

Solution to Problem

In order to solve the above-described problems, the resin composition of the present invention has one of the following constitutions. That is, the resin composition of the present invention is:

a resin composition containing carbon fibers and a thermoplastic resin, wherein the carbon fibers have a tensile elastic modulus E of 350 to 500 GPa, and the tensile elastic modulus E (GPa) and a loop fracture load A (N) satisfy the relationship of the following Formula (1) (this mode is hereinafter referred to as "first mode"):

$$A \geq -0.0017 \times E + 1.02 \qquad \text{Formula (1)};$$

a resin composition containing carbon fibers and a thermoplastic resin, wherein the carbon fibers have a crystallization parameter Iv/Ig of 0.65 or less as determined by Raman spectroscopy, and the crystallization parameter Iv/Ig and a tensile elastic modulus E (GPa) satisfy the relationship of the following Formula (2) (this mode is hereinafter referred to as "second mode"):

$$E \geq 290 \times (Iv/Ig)^{-0.23} \quad \text{Formula (2)};$$

or

a resin composition containing carbon fibers and a thermoplastic resin, wherein a flexural modulus FM (GPa) of the resin composition, a mass fraction of the carbon fibers Wf (%) in the resin composition, and a tensile elastic modulus E (GPa) of the carbon fibers satisfy the relationships of the following Formulae (5) and (6) (this mode is hereinafter referred to as "third mode"):

$$FM/Wf^{0.5} > 6.8 \qquad \text{Formula (5)}$$

$$FM/Wf^{0.5} > 0.01 \times E + 3.00 \quad \text{Formula (6)}$$

The molded article of the present invention has the following constitution. That is, the molded article of the present invention is a molded article obtained by molding the above-described resin composition.

In the resin composition according to the second mode of the present invention, the crystallization parameter Iv/Ig of the carbon fibers is preferably 0.40 or higher as determined by Raman spectroscopy.

In the resin composition according to the first or the second mode of the present invention, it is preferred that a size of crystallites Lc (nm) and a single-fiber compressive strength Fc (GPa), which is determined by a compression fragmentation method of single-fiber composite, of the carbon fibers satisfy the relationship of the following Formula (3):

$$Fc \geq 1.3 \times 10/Lc - 0.2 \, \text{Formula (3)}$$

In the resin composition according to the first or the second mode of the present invention, it is preferred that the carbon fibers have an orientation parameter of crystallites $\pi_{002}$ of 80.0 to 95.0% and a size of crystallites Lc of 2.2 to 3.5 nm, and the size of crystallites Lc (nm) and the orientation parameter of crystallites $\pi_{002}$ (%) satisfy the relationship of the following Formula (4):

$$\pi_{002} \geq 4.0 \times \mathrm{Lc} + 73.2 \quad \text{Formula (4)}$$

In the resin composition according to the first or the second mode of the present invention, it is preferred that the resin composition be obtained by melt-kneading the carbon fibers and the thermoplastic resin, and the carbon fibers have a length of 100 mm or greater before the melt-kneading.

In the resin composition according to the first or the second mode of the present invention, it is preferred that the carbon fibers have a heat loss rate of 0.15% or lower at 450°C.

In the resin composition according to the first or the second mode of the present invention, it is preferred that the carbon fibers include a carbon fiber bundle having a number of filaments of 3,000 to 60,000, and a surface layer of the carbon fiber bundle have a twist angle of 2.0° to 30.5°.

In the resin composition according to the first or the second mode of the present invention, it is preferred that the carbon fibers have a single-fiber diameter of not less than 6.0 $\mu$m.

In the resin composition according to the first or the second mode of the present invention, it is preferred that the single-fiber diameter of the carbon fibers be 6.5 to 8.5 $\mu$m.

In the resin composition according to the third mode of the present invention, it is preferred that the mass fraction of the carbon fibers Wf be 15 to 55%.

In the resin composition according to the third mode of the present invention, it is preferred that the flexural modulus FM of the carbon fibers be 41 to 55 GPa. Advantageous Effects of Invention

The resin composition of the present invention has a high moldability into a member of a complex shape by injection molding, and a molded article obtained therefrom has excellent flexural modulus and excellent impact characteristics. Description of Embodiments

The resin composition of the present invention contains carbon fibers and a thermoplastic resin.

First, the carbon fibers used in the present invention will be described.

The carbon fibers used in the present invention have a tensile elastic modulus E of 350 to 500 GPa. The higher the tensile elastic modulus of the carbon fibers, the higher tends to be the flexural modulus of an injection-molded article. When the tensile elastic modulus is less than 350 GPa, the flexural modulus of an injection-molded article cannot be improved. When the tensile elastic modulus of the carbon fibers is higher than 500 GPa, an effect of improving the flexural modulus of an injection-molded article is reduced. A lower limit of the tensile elastic modulus E of the carbon fibers is preferably not less than 370 GPa, more preferably not less than 380 GPa. The tensile elastic modulus of the carbon fibers is evaluated in accordance with the tensile test for resin-impregnated strands that is prescribed in JIS R7608:2004. The details of a method of evaluating the strand elastic modulus will be described later.

The carbon fibers used in the resin composition according to the first mode of the present invention are carbon fibers having a tensile elastic modulus E (GPa) and a loop fracture load A (N) that satisfy the relationship of the following Formula (1):

$$A \geq -0.0017 \times E + 1.02 \qquad \text{Formula (1)}$$

The constant term in Formula (1) is preferably 1.04, more preferably 1.06. The loop fracture load, which corresponds to a load at which a single fiber is fractured when gradually bent into a loop shape, is evaluated by the below-described method. Usually, when the tensile elastic modulus is increased, the loop fracture load tends to be reduced in many cases, and a low loop fracture load makes the carbon fibers be easily fractured due to a force applied in a bending direction during injection molding and thus reduces the fiber length, as a result of which the effect of improving the flexural modulus of an injection-molded article is reduced. In the present invention, even when the tensile elastic modulus of the carbon fibers is increased, the flexural modulus of an injection-molded article cannot be effectively improved unless specific carbon fibers that have a high loop fracture load and satisfy the relationship of Formula (1) are used.

The carbon fibers used in the resin composition according to the second mode of the present invention are carbon fibers having a crystallization parameter Iv/Ig of 0.65 or less as determined by Raman spectroscopy. In the present invention, the crystallization parameter Iv/Ig determined by Raman spectroscopy is evaluated based on an analysis of a Raman spectrum obtained from single-fiber cross-sections of the carbon fibers. A method of this evaluation will be described later in detail. The Raman spectrum includes a G band around 1,580 $cm^{-1}$, a D band around 1,360 $cm^{-1}$, and a valley formed around 1,480 $cm^{-1}$ between these bands. A peak intensity of the G band is defined as "Ig" while a lowest spectral intensity around 1,480 $cm^{-1}$ is defined as "Iv", and a ratio of these values serves as an index that represents the extent of progress of crystallization in the carbon fiber internal structure. In the case of commercially available carbon fibers, those with a tensile elastic modulus of about 380 GPa have an Iv/Ig value of less than 0.2, and those with a tensile elastic modulus of 230 to 290 GPa have an Iv/Ig value of 0.70 or larger. An Iv/Ig value of 0.65 or less indicates sufficient progress of crystallization and an increase in the tensile elastic modulus of the carbon fibers.

The crystallization parameter Iv/Ig can be adjusted by modifying the carbonization highest temperature in the production of the carbon fibers. An upper limit of the crystallization parameter Iv/Ig is preferably 0.60, more preferably 0.55.

The carbon fibers used in the resin composition according to the second mode of the present invention are carbon fibers having a crystallization parameter Iv/Ig and a tensile elastic modulus E (GPa) that satisfy the relationship of the following Formula (2):

$$E \geq 290 \times (Iv/Ig)^{-0.23} \quad \text{Formula (2)}$$

A smaller value of the crystallization parameter Iv/Ig indicates a further progress of crystallization and a further increase in the tensile elastic modulus of the carbon fibers. As a general trend, the tensile elastic modulus is increased at an accelerated rate as the Iv/Ig value decreases as in, for example, "TORAYCA" (registered trademark) T700S-24000-50E manufactured by Toray Industries, Inc. which has an Iv/Ig value of 0.91 and a tensile elastic modulus of 230 GPa, "TORAYCA" (registered trademark) M40J-12000-50E manufactured by Toray Industries, Inc. which has an Iv/Ig value of 0.18 and a tensile elastic modulus of 377 GPa, and "TORAYCA" (registered trademark) M55J-6000-50E manufactured by Toray Industries, Inc. which has an Iv/Ig value of 0.05 and a tensile elastic modulus of 536 GPa, and a substantially exponential relationship is observed between these two parameters. Progress of crystallization makes the carbon fibers be more easily fractured due to a force applied in a bending direction during injection molding and, according to the studies conducted by the present inventors, it was found that carbon fibers satisfying Formula (2) are capable of maintaining the tensile elastic modulus and the fracture resistance both at high levels. The physical meaning of Formula (2) is that it is preferred to use carbon fibers in which crystallization has not proceeded relative to the level of the tensile elastic modulus. By using specific carbon fibers that satisfy the relationship of Formula (2), the flexural modulus of an injection-molded article can be improved effectively. From the viewpoint of more effectively improving the flexural modulus of an injection-molded article, the coefficient of Formula (2) is preferably set at 300 instead of 290.

In the carbon fibers used in the present invention, a lower limit of the crystallization parameter Iv/Ig is preferably not less than 0.25, more preferably not less than 0.30, still more preferably not less than 0.40. When the crystallization parameter Iv/Ig is 0.25 or higher, although the tensile elastic modulus of the carbon fibers themselves is not at an extremely high level, the fracture resistance of the carbon fibers during injection molding is at a certain level or higher; therefore, consequently, the resulting injection-molded article is likely to have a high flexural modulus relative to the tensile elastic modulus of the carbon fibers.

In the carbon fibers used in the present invention, the size of crystallites Lc is preferably 2.2 to 3.5 nm, more preferably 2.4 to 3.3 nm, still more preferably 2.6 to 3.1 nm. The size of crystallites is an index that represents the thickness of crystallites existing in the carbon fibers in the c-axis direction, and corresponds to the amount of heat treatment during carbonization. A further heat treatment is likely to increase the tensile elastic modulus and, at the same time, tends to make the carbon fibers more likely to fracture during injection molding. When the size of crystallites Lc is in the above-described range, the carbon fibers have an excellent balance between the tensile elastic modulus and the fracture resistance. The size of crystallites Lc is evaluated based on the wide-angle X-ray diffraction of the carbon fibers. A method of this evaluation will be described later in detail.

In the carbon fibers used in the present invention, the orientation parameter of crystallites $\pi_{002}$ is preferably 80.0 to 95.0%, more preferably 80.0 to 90.0%, still more preferably 82.0 to 90.0%. The orientation parameter of crystallites $\pi_{002}$ is an index that represents the orientation angle of crystallites existing in the carbon fibers with respect to the fiber axis. Similarly to the size of crystallites, the orientation parameter of crystallites $\pi_{002}$ is evaluated based on wide-angle X-ray diffraction. A method of this evaluation will be described later in detail. When the orientation parameter of crystallites is 80.0% or higher, the carbon fibers are less likely to fracture during injection molding, while when the orientation parameter of crystallites is 95.0% or lower, the carbon fibers are likely to have a satisfactory tensile elastic modulus.

In carbon fibers that can be suitably used in the present invention, the size of crystallites Lc (nm) and the single-fiber compressive strength Fc (GPa) determined by a compression fragmentation method of single-fiber composite have a relationship in a range of the following Formula (3):

$$Fc \geq 1.3 \times 10/Lc - 0.2 \, (3)$$

In the carbon fibers used in the present invention, the right side of Formula (3) is more preferably $1.3 \times 10/Lc$ + 0.1, still more preferably $1.3 \times 10/Lc$ + 0.5. It is generally known that the single-fiber compressive strength tends to be reduced as the size of crystallites of carbon fibers increases. In this respect, by using carbon fibers having a single-fiber compressive strength higher than a conventional level expected from the size of crystallites, the flexural modulus of an injection-molded article can be effectively improved. When the carbon fibers satisfy Formula (3), an injection-molded article having a satisfactory value of flexural modulus can be obtained. The "compression fragmentation method of single-fiber composite" that is employed in the present invention is a method in which, while applying compressive strains in a stepwise manner to a carbon fiber-reinforced composite (single-fiber composite) obtained by embedding single carbon fibers into a resin, the number of fibers fractured due to each compressive strain is counted, whereby the single-fiber compressive strength of the carbon fibers can be investigated. In order to convert the single-fiber composite compressive strain applied at the fiber fracture into the single-fiber compressive strength, it is necessary to take into consideration the difference between the single-fiber composite compressive strain and the fiber compressive strain, as well as the nonlinearity of elastic modulus at each fiber compressive strain. Accordingly, the single-fiber compressive stress is determined by fitting a stress-strain (S-S) curve, which is obtained in a strand tensile test (details will be described later), with a quadratic function ($y = ax^2 + bx + c$) in a range of $0 \leq y \leq 3$ where strain and stress are plotted on the x-axis and the y-axis, respectively, and extending the thus obtained fitting line to the compressive strain side. The single-fiber compressive strength is defined as the single-fiber compressive stress at the point when the number of fractures exceeds 1/10 mm.

In the carbon fibers used in the present invention, the size of crystallites Lc (nm) and the orientation parameter of crystallites $\pi_{002}$ (%) preferably satisfy the relationship of Formula (4):

$$\pi_{002} \geq 4.0 \times Lc + 73.2 \, \text{Formula (4)}$$

According to the studies conducted by the present inventors, the orientation parameter of crystallites $\pi_{002}$ tends to be increased as the size of crystallites Lc increases, and Formula (4) empirically shows an upper limit of this relationship based on the data of known carbon fibers. Usually, as the size of crystallites Lc increases, the tensile elastic modulus of the carbon fibers is improved; however, the loop fracture load and the single-fiber compressive strength tend to be reduced in many cases. Further, the orientation parameter of crystallites $\pi_{002}$ strongly affects the flexural modulus of an injection-molded article, and a higher orientation parameter of crystallites leads to a higher flexural modulus of the injection-molded article. Satisfaction of the relationship of Formula (4) regarding the orientation parameter of crystallites $\pi_{002}$ means that the orientation parameter of crystallites $\pi_{002}$ is high for the size of crystallites Lc and, when the carbon fibers have a high tensile elastic modulus, the flexural modulus of an injection-molded article can be effectively improved, which has a high industrial value. In the present invention, the constant term in Formula (4) is more preferably 73.5, still more preferably 74.0.

The carbon fibers used in the present invention have a heat loss rate at 450°C of preferably 0.15% or lower, more preferably 0.10% or lower, still more preferably 0.07% or lower. In the present invention, the details of a method of measuring the heat loss rate at 450°C will be described later, and the heat loss rate refers to a rate of change in mass before and after 15-minute heating of a certain amount of carbon fibers of interest in an oven having an inert gas atmosphere set at a temperature of 450°C. Carbon fibers having a low heat loss rate under such conditions contain a component pyrolyzed when exposed to a high temperature, such as a sizing agent, only in a small amount and, when the heat loss rate is 0.15% or lower, the carbon fibers have excellent dispersibility in a resin composition, so that the flexural modulus of an injection-molded article is likely to be improved.

The carbon fibers used in the present invention have, in a resin composition obtained by melt-kneading the carbon fibers with a thermoplastic resin, a length of preferably not less than 100 mm, more preferably not less than 1,000 mm, before being melt-kneaded. Carbon fibers generally referred to as "chopped carbon fibers", which have been cut to a length of several millimeters, are often used because of their ease of handling in injection molding. When the carbon fibers have a small length, not only the step of processing continuous fibers into chopped carbon fibers is added but also the flexural modulus of the resulting injection-molded article tends to be reduced, which is not preferred. Therefore, the carbon fibers used in the injection molding are more preferably continuous fibers and, in the present invention, carbon fibers that are continuous over a length of at least 1 m are substantially regarded as continuous fibers.

When the carbon fibers used in the present invention take the form of a carbon fiber bundle having a number of filaments of 3,000 to 60,000, a surface layer of the carbon fiber bundle have a twist angle of preferably 2.0 to 30.5°, more preferably 4.8 to 30.5°, still more preferably 4.8 to 24.0°. The "twist angle" of the surface layer of the carbon fiber bundle refers to an angle formed by the axial direction of single fibers existing in the outermost layer of the carbon fiber bundle with respect to the longitudinal direction of the carbon fiber bundle, and the twist angle may be determined by directly observing the carbon fiber bundle or, for a higher precision, may be calculated from the number of twists, the number of filaments, and the single-fiber diameter as described below. It is preferred to control the twist angle to be in the above-described range since this enables to introduce the carbon fibers to an injection molding machine with good convergence, and the carbon fibers can thus be introduced to the injection molding machine in the state of having a large length, so that the length of the fibers contained in an injection-molded article can be increased.

The carbon fibers used in the present invention have a single-fiber diameter of preferably not less than 6.0 $\mu$m, more preferably not less than 6.5 $\mu$m, still more preferably not less than 6.9 $\mu$m. A larger single-fiber diameter is more likely to allow the fibers to be left with a large length during injection molding and to improve the flexural modulus and, when the single-fiber diameter is 6.0 $\mu$m or greater, the resulting injection-molded article is likely to have an improved flexural modulus. In the present invention, although an upper limit of the single-fiber diameter is not particularly restricted, an excessively large single-fiber diameter may lead to a reduction in the tensile elastic modulus of the carbon fibers; therefore, it may be considered that about 15 $\mu$m is a tentative upper limit. Meanwhile, when the single-fiber diameter is 8.5 $\mu$m or less, a good balance is attained between the tensile elastic modulus and the productivity of the carbon fibers, and this is likely to improve the industrial value. A method of evaluating the single-fiber diameter will be described later, and the single-fiber diameter may be calculated from the specific gravity, the basis weight, and the number of filaments of the fiber bundle, or may be evaluated by observation under a scanning electron microscope. As long as an evaluation apparatus to be used is properly calibrated, the same results can be obtained regardless of which evaluation method is employed. In the evaluation under a scanning electron microscope, when a single fiber does not have a perfectly circular cross-sectional shape, the value of equivalent circle diameter is used as a substitute. The "equivalent circle diameter" means the diameter of a perfect circle having a cross-sectional area equal to the actually measured cross-sectional area of the single-fiber.

The thermoplastic resin used in the present invention is preferably at least one thermoplastic resin selected from the group consisting of a polyolefin, a polyamide, a polyester, a polycarbonate, and a polyarylene sulfide. From the viewpoint of the flexural modulus of the resulting molded article, the thermoplastic resin is more preferably a polyamide and a polyarylene sulfide, particularly preferably a polyarylene sulfide. A wide range of thermoplastic resins can be selected since the use of a thermoplastic resin in combination with the carbon fibers used in the present invention can improve the mechanical properties, such as flexural modulus, of the resulting molded article without any restriction on the type of the thermoplastic resin; however, the effects of the present invention are more likely to be exerted by selecting a thermoplastic resin that is likely to improve the mechanical properties of the molded article, particularly a thermoplastic resin that exhibits a high tensile yield stress.

Examples of the polyolefin include propylene homopolymers, and copolymers of propylene and at least one $\alpha$-olefin, conjugated diene, nonconjugated diene or the like.

Examples of the polyamide include polymers in which repeating amide groups constitute a main chain, for example, aliphatic polyamides such as polyamide 6, polyamide 66, polyamide 11, polyamide 610, and polyamide 612; and aromatic polyamides such as polyamide 6T. The polyamide may also be a mixture of these polyamides, or a copolymer of plural kinds of polyamides.

Examples of the polyarylene sulfide include those which contain, as a structural unit, a p-phenylene sulfide unit, a *m*-phenylene sulfide unit, an o-phenylene sulfide unit, a phenylene sulfide sulfone unit, a phenylene sulfide ketone unit, a phenylene sulfide ether unit, a diphenylene sulfide unit, a substituent-containing phenylene sulfide unit or a branched structure-containing phenylene sulfide unit, and a poly-p-phenylene sulfide is particularly preferred.

In the resin composition of the present invention, additives may be incorporated within a range that does not impair the effects of the present invention. Specific examples of the additives include an antioxidant, a heat stabilizer, a weather resistant agent, a mold release agent, a lubricant, a pigment, a dye, a plasticizer, an antistatic agent, a flame retardant, and a petroleum resin used in injection molding. The "petroleum resin" refers to a polymer of a hydrocarbon compound generated as a by-product during pyrolysis of naphtha, and examples of the petroleum resin include: C9 petroleum resins obtained by polymerizing a C9 fraction composed of an aromatic hydrocarbon; C5 petroleum resins obtained by polymerizing a C5 fraction composed of an aliphatic hydrocarbon; C5-C9 copolymerized petroleum resins obtained by copolymerizing a C9 fraction and a C5 fraction as raw materials; and modified petroleum resins obtained by modifying the above-described petroleum resins with maleic anhydride, maleic acid, fumaric acid, (meth)acrylic acid, phenol, or the like.

In a first preferred mode of a method of producing the resin composition of the present invention, the resin composition is produced by mixing the above-described components simultaneously, or in any order, using a mixing machine such as a tumbler, a V-type blender, a Nauta mixer, a Banbury mixer, a kneading roll, or an extruder, and the components are more preferably melt-kneaded using a twin-screw extruder. As the extruder, one equipped with a vent through which water contained in a raw material and a volatile gas generated from the melt-kneaded resin can be removed can be preferably used. A vacuum pump is preferably arranged for efficiently discharging the generated water and volatile gas to the outside of the extruder from the vent. In addition, a screen for removing foreign matter and the like contained in the extruded raw materials may be arranged in a zone upstream of a die section of the extruder so as to remove foreign matter from the resin composition. Examples of the screen include a metal net, a screen changer, and a sintered metal plate.

In this process, it is preferred to continuously supply the carbon fibers, and it is more preferred to supply the carbon fibers after melt-kneading the thermoplastic resin.

A second preferred mode of a method of producing the resin composition of the present invention is a method in which the above-described petroleum resin is attached to the carbon fibers in advance, and the thermoplastic resin is subsequently adhered thereto. For the step of attaching the petroleum resin, any known production method of applying an oil solution, a sizing agent, or a matrix resin to a fiber bundle may be employed, and more specific examples of such a method include a method in which the surface of a rotating heated roll is coated with a film of molten petroleum resin that has a certain thickness, and the carbon fibers are passed on the surface of this roll in contact so as to attach a prescribed amount of the petroleum resin per unit length of the carbon fibers. Coating of the roll surface with the petroleum resin can be realized by applying the concept of a known coating apparatus such as a reverse roll, positive rotation roll, kiss roll, spray, curtain, or extrusion coating apparatus. In the step of attaching the petroleum resin to the carbon fibers, the petroleum resin is allowed to impregnate into the gaps between the single fibers of carbon fiber bundle by an operation of, for example, applying a tension to the carbon fibers, to which the petroleum resin has been attached, using a roll or a bar at a temperature that melts the petroleum resin; repeatedly spreading and bundling the carbon fibers; and/or applying pressure or vibration. More specifically, for example, a method of passing the carbon fibers in contact with the surfaces of plural heated rolls or bars may be employed.

Further, petroleum resin-attached carbon fibers composed of the carbon fibers and the petroleum resin are brought into contact with the above-described thermoplastic resin to form a resin composition. In this thermoplastic resin arrangement step, molten thermoplastic resin is arranged such that it is brought into contact with the petroleum resin-attached carbon fibers. More specifically, this step is performed by, for example, a method of arranging the thermoplastic resin in such a manner to continuously cover the periphery of the petroleum resin-attached carbon fibers using an extruder and a coating die for electric wire coating, or a method of arranging the thermoplastic resin, which has been melted into a film form using an extruder and a T-die, onto one or both sides of the petroleum resin-attached carbon fibers flattened by a roll or the like, and subsequently integrating the thermoplastic resin with the carbon fibers using a roll or the like.

After the carbon fibers are integrated with the thermoplastic resin in the above-described first or second preferred mode, the resultant may be cut to a certain length of, for example, 1 to 50 mm, using an apparatus such as a pelletizer or a strand cutter. This cutting step may be continuously incorporated after the thermoplastic resin arrangement step. When the molded material is flat or in a sheet form, the molded material may be elongated by slitting before being cut. A sheet pelletizer or the like, which performs slitting and cutting simultaneously, may be used as well.

The resin composition of the present invention has a flexural modulus FM of preferably 41 to 55 GPa, more preferably 44 to 55 GPa. The flexural modulus, which is measured in accordance with ISO178, is a major factor of the rigidity that represents the deflection resistance of a member. A higher flexural modulus allows a member to maintain its deflection resistance even with a reduction in the amount of the resin composition used herein, and this leads to a weight reduction of the member. A flexural modulus of 41 GPa or higher, which is a property comparable to that of a magnesium alloy that is a representative of light metals, is a satisfactory result. The higher the flexural modulus, the more preferred it is; however, a flexural modulus of 55 GPa or less is sufficient for substituting a magnesium alloy. In order to control the flexural modulus in the above-described range, it is important to use the above-described carbon fibers.

The resin composition of the present invention contains the carbon fibers in an amount of preferably 15 to 55% by mass, more preferably 25 to 50% by mass. The mass fraction of the carbon fibers, Wf, can be adjusted in accordance with the intended use and the target physical properties and, in consideration of only the flexural modulus of the resin composition, it is preferred to increase the mass fraction. When the mass fraction of the carbon fibers is 15% by mass or higher, the resin composition has a high flexural modulus, while when the mass fraction of the carbon fibers is 55% by mass or lower, the resin composition can maintain its moldability in injection molding. The mass fraction of the carbon fibers can be calculated from the added ratio of the carbon fibers, the thermoplastic resin, and other additive components.

In the resin composition of the present invention that contains the carbon fibers and the thermoplastic resin, the flexural modulus FM (GPa) of the resin composition, the mass fraction of the carbon fibers Wf (%) in the resin composition, and the tensile elastic modulus E (GPa) of the carbon fibers satisfy the relationships of the following Formulae (5) and (6):

$$FM/Wf^{0.5} > 6.8 \qquad \text{Formula (5)}$$

$$FM/Wf^{0.5} > 0.01 \times E + 3.00 \quad \text{Formula (6)}$$

The flexural modulus is dependent on, but not proportional to the mass fraction of the carbon fibers Wf; therefore, the flexural modulus is empirically normalized to the 0.5th power of Wf. When the value of $FM/Wf^{0.5}$ is 6.8 or less and does not satisfy the relationship of Formula (5), an effect of improving the flexural modulus of the resin composition is not expected to be obtained with respect to the mass fraction of the carbon fibers. Further, when the relationship of Formula (6) is not satisfied, the flexural modulus FM of the resin composition cannot be effectively improved even if the tensile elastic modulus E of the carbon fibers is increased. The present inventors have confirmed that the resin compositions described in the section of Examples of the above-described Patent Literatures 1 to 3 do not satisfy Formulae (5) and (6). In order to control a resin composition to satisfy Formulae (5) and (6), it is necessary to select the carbon fibers used in the present invention.

In a molded article obtained from the resin composition of the present invention, the carbon fibers have a number average fiber length of preferably 0.3 to 2 mm, more preferably 0.4 to 1 mm. By controlling the number average fiber length to be in this range, the effect of the carbon fibers to reinforce the thermoplastic resin in the molded article can be enhanced, so that the mechanical properties of the molded article can be sufficiently improved. A method of measuring the number average fiber length in the molded article will now be described. One example of a method of measuring the number average fiber length of the carbon fibers contained in the molded article is a method in which the resin component contained in the molded article is removed by a dissolving method or a burn-off method, and the remaining carbon fibers are separated by filtration and subsequently measured by observation under a microscope. In this measurement, 400 carbon fibers are randomly selected and their lengths are measured to the nearest 1 $\mu$m under a light microscope, and the number average fiber length is calculated by dividing a total length of the fibers by the number of the fibers. The number average fiber length can be controlled in the above-described range by using the above-described carbon fibers that are unlikely to fracture during injection molding.

< Tensile Elastic Modulus of Carbon Fibers>

The tensile elastic modulus of the carbon fibers is determined by the following procedure in accordance with the resin-impregnated strand test method prescribed in JIS R7608(2004). It is noted here that, when a bundle of the carbon fibers has twists, evaluation is made after untwisting the fiber bundle by applying thereto reverse twists in the same number as that of the original twists. As a resin formulation, "CELLOXIDE" (registered trademark) 2021P (manufactured by Daicel Corporation)/boron trifluoride monoethylamine (manufactured by Tokyo Chemical Industry Co., Ltd.)/acetone = 100/3/4 (parts by mass) is used under the curing conditions of normal pressure, a temperature of 125°C, and a curing time of 30 minutes. A total of 10 strands of carbon fiber bundles are measured, and average values thereof are taken as the strand strength and the strand elastic modulus. It is noted here that the strain used for calculating the strand elastic modulus is in a range of 0.1 to 0.6%.

<Crystallization Parameter Iv/Ig Determined by Raman Spectroscopy>

The resin composition is embedded in a resin, and the resultant is polished to expose the single fiber cross-sections of the carbon fibers. In order to avoid the effect of polishing damage on Raman spectrum, finish polishing with a polishing material of about 0.05 $\mu$m in diameter is performed in the final stage of polishing. For randomly selected five single-fiber cross-sections of the carbon fibers, Raman spectrum is measured using a micro Raman spectrometer. The measurement points are in the vicinity of the center of the respective single-fiber cross-sections. The measurement is performed at an excitation wavelength of 532 nm and a laser intensity of 1 mW in a measurement range of 900 to 2,000 $cm^{-1}$ with a laser beam of 2 $\mu$m in diameter for a measurement time of 60 seconds $\times$ 3 integrations. The baseline of the thus obtained spectrum is offset with a linear function such that the scattering intensity is 0 at 1,000 $cm^{-1}$ and 1,800 $cm^{-1}$, and the height of the G band and that of the bottom of a valley around 1,480 $cm^{-1}$ are defined as "Ig" and "Iv", respectively, to calculate the crystallization parameter Iv/Ig. In order to minimize the effect of errors, with regard to the Ig, least squares approximation with a quadratic function is performed for a range of about $\pm$ 10 $cm^{-1}$ from the vicinity of a visually-confirmed peak of the G band, and the peak top intensity of the thus obtained fitting function is taken as the Ig. The Iv is also determined in the same manner for the vicinity of the valley around 1,480 $cm^{-1}$. In the present invention, an average Iv/Ig value of five spots is used.

In Examples described below, "EpoKwick" (registered trademark) FC (manufactured by Buehler Ltd.) was used as an embedding resin, and "AutoMet" (registered trademark) 250Pro (manufactured by Buehler Ltd.) was used as a polishing machine. As for the polishing, rough polishing was performed using #320, #500, and #700 polishing pads, and finish polishing was subsequently performed using "MasterTex" (manufactured by Buehler Ltd.) as a polishing cloth and a 0.05 $\mu$m-diameter alumina suspension as a polishing agent. In order to verify the presence or absence of polishing damage, at the time of embedding the resin composition into the resin, "TORAYCA" (registered trademark) M40J-12000-50E manufactured by Toray Industries, Inc. is always embedded together as a blank such that the direction of the fiber axis is perpendicular to the polishing surface. An Iv/Ig value of 0.18 ± 0.02 as evaluated for this M40J by the above-described method means that polishing damage is minimized, and the polishing is performed again otherwise.

<Average Single-Fiber Diameter of Carbon Fibers>

Single-fiber cross-sections of carbon fibers to be evaluated are observed under a scanning electron microscope to evaluate the cross-sectional area. The diameter of a perfect circle having the same cross-sectional area as the thus evaluated cross-sectional area is calculated and defined as "single-fiber diameter". The single-fiber diameter is calculated for 50 fibers (N = 50), and an average value thereof is used. The accelerating voltage is set at 5 keV.
In the present invention, as the scanning electron microscope (SEM), S-4800 manufactured by Hitachi High-Tech Corporation can be employed.

<Twist Angle of Carbon Fiber Bundle Surface Layer>

A guide bar is arranged at a height of 60 cm from a horizontal plane, and an arbitrary position of a carbon fiber bundle is taped to the guide bar to prepare a fixed end, after which the carbon fiber bundle is cut at a position 50 cm away from the fixed end to form a free end. This free end is sandwiched and thereby enclosed between tapes such that it will not be disassembled into single fibers. In order to eliminate those non-semipermanent twists that exist temporarily or are untwisted with time, the carbon fiber bundle is left to stand in this state for 5 minutes, and the free end is subsequently turned while counting the number of turns. The number of turns required for completely untwisting the carbon fiber bundle, n (turns), is recorded, and the number of remaining twists is calculated by the following equation. The above-described measurement is performed three times, and an average thereof is taken as the number of remaining twists in the present invention.

$$\text{Number of remaining twists (turns/m)} = n \text{ (turns)}/0.5 \text{ (m)}$$

After calculating the diameter ($\mu$m) of the whole carbon fiber bundle from the above-described single-fiber diameter ($\mu$m) and the number of filaments by the following equation, the twist angle (°) of the carbon fiber bundle surface layer is calculated by the following equation using the number of twists (turns/m).

$$\text{Diameter of whole carbon fiber bundle } (\mu\text{m}) = \{(\text{Single-fiber diameter})^2 \times$$
$$\text{Number of filaments}\}^{0.5}$$

$$\text{Twist angle of carbon fiber bundle surface layer } (°) = \text{atan (Diameter of}$$
$$\text{whole fiber bundle} \times 10^{-6} \times \pi \times \text{Number of twists)}$$

<Loop Fracture Load>

A single fiber of about 10 cm in length is placed on a glass slide, and a loop is formed in the midportion of the single fiber by applying 1 to 2 drops of glycerin to the midportion and lightly twisting both ends of the single fiber in the fiber circumferential direction, after which a cover glass is placed thereon. This glass slide is set on the stage of a microscope, and a moving image is recorded at a total magnification of × 100 and a frame rate of 15 frames/second. While adjusting the stage each time to keep the loop in the visual field, both ends of the looped fiber are pressed with fingers towards the glass slide, and the fiber is simultaneously pulled in the opposite direction at a constant speed to apply strain until the single fiber is fractured. A frame immediately before the fracture is identified by frame-by-frame playback, and the lateral width W of the loop immediately before the fracture is determined by image analysis. The single-fiber diameter d is divided by W to calculate d/W. The number n of tested single fibers is 20, and the average d/W value is multiplied by the tensile elastic modulus E to determine the loop strength E × d/W. Further, the thus obtained value is multiplied by the cross-sectional area $\pi d^2/4$ calculated from the single-fiber diameter so as to determine the loop fracture load $\pi E \times d^3/4W$.

<Single-Fiber Compressive Strength of Carbon Fibers>

Measurement of the single-fiber compressive strength by a compression fragmentation method of single-fiber composite is performed in accordance with the following procedures (i) to (v).

(i) Preparation of Resin

In a container, 190 parts by mass of a bisphenol A-type epoxy resin compound "EPOTOTE" (registered trademark) YD-128 (manufactured by Nippon Steel Chemical & Material Co., Ltd.) and 20.7 parts by mass of diethylenetriamine (manufactured by Wako Pure Chemical Industries, Ltd.) are added and mixed with a spatula, and the resulting mixture is defoamed using an automatic vacuum defoamer.

(ii) Sampling of Carbon Single Fibers and Fixation to Mold

A carbon fiber bundle of about 20 cm in length is substantially equally divided into four bundles, and single fibers are sampled from these four bundles. In this process, single fibers are sampled from the entire bundles as evenly as possible. Next, a double-sided tape is attached to both ends of a perforated backing paper, and the sampled single fibers are fixed onto the perforated backing paper with a constant tension being applied to the single fibers. Subsequently, a glass plate having a polyester film "LUMIRROR" (registered trademark) (manufactured by Toray Industries, Inc.) pasted thereon is prepared, and a 2 mm-thick spacer used for adjusting the thickness of a test piece is fixed onto the film. On this spacer, the perforated backing paper having the single fibers fixed thereon is placed and, further thereon, another glass plate having the film pasted thereon in the same manner is set with the film-pasted side facing down. In this process, in order to control the embedding depth of the fiber, a tape of about 70 μm in thickness is attached to both ends of the film.

(iii) From Casting to Curing of Resin

The resin prepared by the above-described procedure (i) is poured into a mold (space surrounded by the spacer and the films) prepared by the above-described procedure (ii). This mold containing the resin poured therein is heated for 5 hours in an oven preheated to 50°C, and the temperature is subsequently lowered to 30°C at a temperature decrease rate of 2.5°C/min. Thereafter, the resin is removed from the mold and cut to obtain a 2 cm × 7.5 cm × 0.2 cm test piece. In this process, the test piece is cut such that the single fibers are positioned within a width of 0.5 cm in the widthwise center of the test piece.

(iv) Measurement of Fiber Embedding Depth

For the test piece obtained in the above-described procedure (iii), the fiber embedding depth is measured using a laser of a laser Raman spectrophotometer (NRS-3200, manufactured by JASCO Corporation) and a 532-nm notch filter. First, the single-fiber surface is irradiated with the laser, and the stage height is adjusted to minimize the laser beam diameter. This stage height is defined as "A" (μm). Next, the surface of the test piece is irradiated with the laser, and the stage height is adjusted to minimize the laser beam diameter. This stage height is defined as "B" (μm). The fiber embedding depth d (μm) is calculated by the following equation using the refractive index of the resin, which is measured to be 1.732 using the above-described laser.

$$d = (A - B) \times 1.732$$

(v) Four-Point Bending Test

A compressive strain is applied to the test piece obtained in the above-described procedure (iii) by 4-point bending using a fixture provided with outer indenters at an interval of 50 mm and inner indenters at an interval of 20 mm. The strain is applied stepwise in increments of 0.1%, and the test piece is observed under a polarization microscope to measure the number of fractures in a 5 mm-wide area in the center of the test piece longitudinal direction. Twice the value of the thus measured number of fractures is defined as "number of fractured fibers" (fibers/10 mm), the compressive stress calculated from the compressive strain at which the average number of fractured fibers in 30 tests exceeds 1 fiber/10 mm is defined as "single-fiber compressive strength". Further, the single-fiber composite strain $\varepsilon$ (%) is measured using a strain gauge attached to the test piece at a position about 5 mm away from the center in the width direction. The final carbon single fiber compressive strain $\varepsilon_c$ is calculated by the following equation, taking into consideration the gauge factor κ of the strain gauge, the fiber embedding depth d (μm) determined by the above-described procedure (iv), and a residual strain of 0.14 (%).

$$\varepsilon_c = \varepsilon \times (2/\kappa) \times (1 - d/1{,}000) - 0.14$$

<Heat Loss Rate of Carbon fiber Bundle at 450°C>

A carbon fiber bundle to be evaluated, which has a mass of 2.5 g, is cut and wound into a skein of about 3 cm in diameter, and the pre-heating mass wo (g) is weighed. Subsequently, the skein is heated for 15 minutes in an oven having 450°C nitrogen atmosphere and then cooled to room temperature in a desiccator, after which the post-heating mass $w_1$ (g) is weighed. The heat loss rate at 450°C is calculated using the following equation. The evaluation is performed three times, and an average value thereof is used.

$$\text{Heat loss rate at } 450°C\ (\%) = (w_0 - w_1)/w_0 \times 100\ (\%)$$

<Size of Crystallites Lc and Orientation Parameter of Crystallites $\pi_{002}$ of Carbon Fiber Bundle>

A carbon fiber bundle to be measured is paralleled and hardened with a collodion alcohol solution to prepare a measurement sample having a quadrangular prism shape with a height of 4 cm and a side length of 1 mm. The thus prepared measurement sample is measured under the following conditions using a wide-angle X-ray diffraction apparatus.

[1] Measurement of Size of Crystallites Lc

- X-ray source: CuKα radiation (tube voltage: 40 kV, tube current: 30 mA)
- Detector: goniometer + monochromator + scintillation counter
- Scanning range: 2θ = 10° to 40°
- Scanning mode: step scan, step unit: 0.02°, counting time: 2 seconds

In the thus obtained diffraction pattern, the half-width is determined for a peak appearing at about 2θ = 25 to 26°, and the size of crystallites is calculated from this value using the following Scherrer equation:

$$\text{Size of crystallites (nm)} = K\lambda/\beta_0 \cos\theta_B$$

wherein,

K: 1.0, λ: 0.15418 nm (X-ray wavelength)
$\beta_0$: $(\beta_E{}^2 - \beta_1{}^2)^{1/2}$
$\beta_E$: apparent half-width (measured value) rad, $\beta_1$: $1.046 \times 10^{-2}$ rad
$\theta_B$: Bragg diffraction angle

[2] Measurement of Orientation Parameter of Crystallites $\pi_{002}$

From the half-width of the intensity distribution obtained by scanning the above-described crystal peak in the circumferential direction, the orientation parameter of crystallites $\pi_{002}$ is calculated using the following equation.

$$\pi_{002} = (180 - H)/180$$

wherein,
H: apparent half-width (deg)
The above-described measurements are each performed three times, and arithmetic means thereof are adopted as the size of crystallites and the orientation parameter of crystallites of the carbon fiber bundle.
In below-described Examples and Comparative Examples, XRD-6100 manufactured by Shimadzu Corporation was used as the above-described wide-angle X-ray diffraction apparatus.

<Bending Test of Molded Article>

For an ISO dumbbell test piece, the flexural strength is measured in accordance with ISO178 (2010) using a 3-point bending fixture (indenter radius: 5 mm) with a fulcrum distance of 64 mm at a test speed of 2 mm/min. The test piece is subjected to a property evaluation test after being left to stand for 24 hours in a thermo-hygrostat chamber adjusted to 23°C and 50% RH The measurement is performed for six molded articles (n = 6), and an average value thereof is determined as the flexural strength.

In the below-described Examples and Comparative Examples, "INSTRON" (registered trademark) universal tester Model 4201 (manufactured by Instron Corporation) was used as a testing apparatus.

<Charpy Impact Strength of Molded Article>

A parallel portion of an ISO dumbbell test piece is cut out, and a V-notch Charpy impact test is performed in accordance with ISO179 (2010) using a C1-4-01 tester manufactured by Tokyo Koki testing Machine Co., Ltd. to determine the impact strength ($kJ/m^2$).

<Number Average Fiber Length of Carbon Fibers Contained in Molded Article>

A portion of a molded article is cut out as a sample, and this sample is heated in the air in an electric furnace at 500°C for 30 minutes to sufficiently burn off and remove a thermoplastic resin (A) and a compound (B) and thereby separate carbon fibers. At least 400 fibers are randomly extracted from the thus separated carbon fibers, and their lengths are measured to the nearest 1 μm under a light microscope, followed by calculation of the number average fiber length (Ln) using the following equation.

$$\text{Number average fiber length (Ln)} = (\Sigma Li)/Nf$$

wherein,

Li: measured fiber length (i = 1, 2, 3, ···, n)
Nf: total number of fibers for which the length is measured

Examples

The present invention will now be described in detail by way of Examples; however, the present invention is not limited thereto. Particularly, evaluation was carried out for those cases where specific carbon fibers were applied with only a single kind of representative thermoplastic resin; however, the present invention is not limited in terms of the type of the thermoplastic resin.

[Example 1]

A spinning dope solution containing a polyacrylonitrile copolymer composed of acrylonitrile and itaconic acid was prepared. A coagulated yarn was obtained by a dry-jet wet spinning method in which the thus prepared spinning dope solution was once extruded from a spinneret into the air and subsequently introduced to a coagulation bath containing an aqueous dimethyl sulfoxide solution. This coagulated yarn was washed with water, and subsequently stretched in 90°C hot water at a stretching ratio of 3, treated with a silicone oil agent, dried using a roller heated to a temperature of 160°C, and then stretched in pressurized steam at a stretching ratio of 4, whereby carbon fiber precursor fiber bundles having a single fiber fineness of 1.1 dtex were obtained. Next, four of the thus obtained precursor fiber bundles were gathered to bring the number of single fibers to 12,000, and converted into a flame-retardant fiber bundle by a heat treatment performed in an oven having a 230 to 280°C air atmosphere at a stretching ratio of 1. The thus obtained flame-retardant fiber bundle was imparted with twists of 45 turns/m by a twisting treatment, and then subjected to a pre-carbonization treatment in a 300 to 800°C nitrogen atmosphere at a stretching ratio of 1.0, whereby a pre-carbonized fiber bundle was obtained. Thereafter, a carbon fiber bundle was prepared by performing a carbonization treatment of the thus obtained pre-carbonized fiber bundle at a stretching ratio of 1.02 and a carbonization temperature of 1,900°C without applying a sizing agent.

Using a long-fiber-reinforced resin pellet production apparatus in which a coating die for electric wire coating was fitted to the tip of a TEX-30α twin-screw extruder manufactured by The Japan Steel Works, Ltd. (screw diameter = 30 mm, L/D = 32) and the cylinder temperature of the extruder was set at 330°C, a polyphenylene sulfide resin ("TORELINA" (registered trademark) M2888, manufactured by Toray Industries, Inc.), which is a thermoplastic resin, was supplied from a main hopper and melt-kneaded at a screw rotation speed of 200 rpm. A solid bisphenol A-type epoxy resin ("jER" (registered trademark) 1004AF (E-2) manufactured by Mitsubishi Chemical Corporation, softening point = 97°C), which had been heat-melted at 200°C, was added thereto while adjusting the extrusion rate such that this resin was added in an amount of 8.7 parts by mass with respect to 100 parts by mass of the carbon fibers, and the resulting composition containing the molten thermoplastic resin was supplied to a die port (3 mm in diameter), from which the composition was continuously extruded in such a manner to cover the periphery of the carbon fibers. The thus obtained strand was cooled and subsequently cut into pellets of 7 mm in length using a cutter to produce long-fiber pellets. In this process, the take-up speed was adjusted such that the pellets contained 30% by mass of the carbon fibers.

The thus obtained long-fiber pellets were injection-molded using an injection molding machine (J110AD, manufactured by The Japan Steel Works, Ltd.) under the following conditions: injection time = 5 seconds, back pressure = 5 MPa, holding pressure = 20 MPa, pressure holding time = 10 seconds, cylinder temperature = 330°C, and a mold temperature = 130°C, whereby an ISO dumbbell test piece was produced as a molded article. It is noted here that the "cylinder temperature" refers to the temperature of a section of the injection molding machine where a molding material was heated and melted, and the "mold temperature" refers to the temperature of a mold into which the resin to be molded into a prescribed shape was injected. The properties of the thus obtained test piece (molded article) were evaluated. The evaluation results obtained by the above-described respective methods are summarized in Table 1.

[Table 1]

| | Carbon Fiber | | | | | | | | | | | | | | Resin Composition | | | | | | Molded Article |
|---|---|---|---|---|---|---|---|---|---|---|---|---|---|---|---|---|---|---|---|---|---|---|
| | Tensile Elastic Modulus E | Single Fiber Diameter | Specific Gravity | Twist Angle of the Surface Layer of the Carbon Fiber Bundle | Loop Fracture Load A | Single Fiber Compres-sive Strength Fc | Orientation Parameter of Crystallines $\pi_{002}$ | Size of Crystallites Lc | Eq. (1) | Crystalli-zation Parameter by Raman Spectro-scopy Iv/Ig | Eq. (2) | Eq. (3) | Eq. (4) | Weight Loss Ratio on Heating at 450°C | Mass Content of Carbon Fiber Wf | Flexural Strength | Flexural Modulus FM | Impact Strength | Eq. (5) | Eq. (6) | Number Average Fiber Length |
| | GPa | μm | - | ° | N | GPa | % | nm | | - | | | | % | % | MPa | GPa | kJ/m² | | | μm |
| Example 1 | 390 | 7.2 | 1.74 | 6.6 | 0.47 | 4.5 | 87.1 | 2.9 | Yes | 0.52 | Yes | Yes | Yes | 0.06 | 30 | 370 | 41 | 11 | Yes | Yes | 380 |
| Example 2 | 480 | 7.0 | 1.91 | 6.6 | 0.25 | 3.3 | 88.2 | 4.6 | Yes | 0.14 | Yes | No | No | 0.06 | 30 | 210 | 48 | 5 | Yes | Yes | 260 |
| Example 3 | 499 | 6.9 | 1.91 | 6.6 | 0.26 | 3.4 | 90.2 | 4.5 | Yes | 0.14 | Yes | No | No | 0.06 | 30 | 220 | 49 | 5 | Yes | Yes | 270 |
| Example 4 | 390 | 7.2 | 1.74 | 6.6 | 0.47 | 4.5 | 87.1 | 2.9 | Yes | 0.52 | Yes | Yes | No | 0.06 | 20 | 320 | 31 | 8 | Yes | Yes | 410 |
| Example 5 | 390 | 7.2 | 1.74 | 6.6 | 0.47 | 4.5 | 87.1 | 2.9 | Yes | 0.52 | Yes | Yes | Yes | 0.06 | 45 | 320 | 50 | 11 | Yes | Yes | 170 |
| Comparative Example 1 | 230 | 7.0 | 1.80 | 0 | 0.56 | 4.4 | 81.0 | 1.8 | No | 0.91 | No | No | Yes | 1.00 | 30 | 420 | 27 | 14 | No | No | 550 |
| Comparative Example 2 | 377 | 5.2 | 1.75 | 1.3 | 0.24 | 3.2 | 87.9 | 3.7 | No | 0.18 | No | No | No | 1.20 | 30 | 350 | 37 | 5 | No | No | 270 |
| Comparative Example 3 | 472 | 5.0 | 1.87 | 1.3 | 0.19 | 1.8 | 91.2 | 5.1 | No | 0.10 | No | No | No | 1.20 | 30 | 340 | 40 | 5 | Yes | No | 170 |
| Comparative Example 4 | 536 | 4.9 | 1.90 | 1.3 | 0.1 | 1.6 | 92.8 | 5.6 | No | 0.05 | No | No | No | 1.20 | 30 | 290 | 40 | 4 | Yes | No | 140 |
| Comparative Example 5 | 230 | 7.0 | 1.80 | 0 | 0.56 | 4.4 | 81.0 | 1.8 | No | 0.91 | No | No | Yes | 1.00 | 30 | 330 | 27 | 6 | No | No | 220 |
| Comparative Example 6 | 295 | 5.5 | 1.80 | 0 | 0.59 | 4.8 | 82.1 | 2.0 | Yes | 0.72 | No | No | Yes | 1.00 | 30 | 410 | 34 | 14 | No | No | 540 |

In the columns of Formula (1) to Formula (6) in Table 1, "Yes" means that the relationship of the corresponding formula in each column is satisfied, while "No" means that the relationship of the corresponding formula in each column is not satisfied.

[Example 2]

Evaluation was carried out in the same manner as in Example 1, except that the carbon fibers obtained in Example 1 were subjected to an additional heat treatment in a 2,350°C nitrogen atmosphere at a stretching ratio of 1.00.

[Example 3]

Evaluation was carried out in the same manner as in Example 2, except that the stretching ratio in the additional heat treatment performed at 2,350°C was changed to 1.02.

[Example 4]

Evaluation was carried out in the same manner as in Example 1, except that the mass fraction of the carbon fibers contained in the resin composition was changed to 20% by mass.

[Example 5]

In a twin-screw extruder (TEX-30α manufactured by The Japan Steel Works, Ltd., L/D = 31.5), a polyphenylene sulfide resin was main-fed and the same carbon fiber bundle as the one used in Example 1 was side-fed, and these components were melt-kneaded. This melt-kneading was performed at a cylinder temperature of 290°C, a screw rotation speed of 150 rpm, an extrusion rate of 10 kg/hr, and the extruded material was cooled in a water cooling bath while being taken up so as to prepare a strand, after which the resulting gut was cut to a length of 5 mm to obtain pellets.
The thus obtained pellets were injection-molded using an injection molding machine (J150EII-P, manufactured by The Japan Steel Works, Ltd.) to produce test pieces for various evaluations. This injection molding was performed at a cylinder temperature of 320°C and a mold temperature of 150°C. The thus obtained test pieces were annealed at 150°C for 2 hours, subsequently air-cooled, and then subjected to various tests.

[Comparative Example 1]

Evaluation was carried out in the same manner as in Example 1, except that the carbon fibers were changed to "TORAYCA" (registered trademark) T700S-24000-50E manufactured by Toray Industries, Inc.

[Comparative Example 2]

Evaluation was carried out in the same manner as in Example 1, except that the carbon fibers were changed to "TORAYCA" (registered trademark) M40J-12000-50E manufactured by Toray Industries, Inc.

[Comparative Example 3]

Evaluation was carried out in the same manner as in Example 1, except that the carbon fibers were changed to "TORAYCA" (registered trademark) M50J-6000-50E manufactured by Toray Industries, Inc.

[Comparative Example 4]

Evaluation was carried out in the same manner as in Example 1, except that the carbon fibers were changed to "TORAYCA" (registered trademark) M55J-6000-50E manufactured by Toray Industries, Inc.

[Comparative Example 5]

Evaluation was carried out in the same manner as in Example 5, except that the carbon fibers were changed to "TORAYCA" (registered trademark) T700S-24000-50E manufactured by Toray Industries, Inc. and the amount of the carbon fibers contained in the resin composition was changed to 30% by mass.

[Comparative Example 6]

Evaluation was carried out in the same manner as in Example 1, except that the carbon fibers were changed to "TORAYCA" (registered trademark) T800S-24000-10E manufactured by Toray Industries, Inc.

Industrial Applicability

The resin composition of the present invention can be used in a wide range of applications, such as compounds, pellets, SMCs (sheet molding compounds), and UD (unidirectional) tapes. These intermediate substrates can be eventually used in various components and members, and are particularly suitable for electric/electronic equipment, OA equipment, household electric appliances, components/internal members and chassis of automobiles, and the like.

**Claims**

1. A resin composition, comprising:

   carbon fibers; and
   a thermoplastic resin,
   wherein

   the carbon fibers have a tensile elastic modulus E of 350 to 500 GPa, and
   the tensile elastic modulus E (GPa) and a loop fracture load A (N) satisfy the relationship of the following Formula (1):

   $$A \geq -0.0017 \times E + 1.02 \qquad \text{Formula (1)}.$$

2. A resin composition, comprising:

   carbon fibers; and
   a thermoplastic resin,
   wherein

   the carbon fibers have a crystallization parameter Iv/Ig of 0.65 or less as determined by Raman spectroscopy, and
   the crystallization parameter Iv/Ig and a tensile elastic modulus E (GPa) satisfy the relationship of the following Formula (2):

   $$E \geq 290 \times (Iv/Ig)^{-0.23} \quad \text{Formula (2)}.$$

3. The resin composition according to claim 2, wherein the crystallization parameter Iv/Ig of the carbon fibers is 0.40 or higher as determined by Raman spectroscopy.

4. The resin composition according to any one of claims 1 to 3, wherein a size of crystallites Lc (nm) and a single-fiber compressive strength Fc (GPa), which is determined by a compression fragmentation method of single-fiber composite, of the carbon fibers satisfy the relationship of the following Formula (3):

   $$Fc \geq 1.3 \times 10/Lc - 0.2 \quad \text{Formula (3)}.$$

5. The resin composition according to any one of claims 1 to 4, wherein the carbon fibers have an orientation parameter of crystallites $\pi_{002}$ of 80.0 to 95.0% and a size of crystallites Lc of 2.2 to 3.5 nm, and the size of crystallites Lc (nm) and the orientation parameter of crystallites $\pi_{002}$ (%) satisfy the relationship of the following Formula (4):

$$\pi_{002} \geq 4.0 \times Lc + 73.2 \quad \text{Formula (4)}.$$

6. The resin composition according to any one of claims 1 to 5, wherein

   the resin composition is obtained by melt-kneading the carbon fibers and the thermoplastic resin, and
   the carbon fibers have a length of 100 mm or greater before the melt-kneading.

7. The resin composition according to any one of claims 1 to 6, wherein the carbon fibers have a heat loss rate of 0.15% or lower at 450°C.

8. The resin composition according to any one of claims 1 to 7, wherein

   the carbon fibers comprise a carbon fiber bundle having a number of filaments of 3,000 to 60,000, and
   a surface layer of the carbon fiber bundle has a twist angle of 2.0° to 30.5°.

9. The resin composition according to any one of claims 1 to 8, wherein the carbon fibers have a single-fiber diameter of not less than 6.0 $\mu$m.

10. The resin composition according to claim 9, wherein the single-fiber diameter of the carbon fibers is 6.5 to 8.5 $\mu$m.

11. A resin composition, comprising:

    carbon fibers; and
    a thermoplastic resin,
    wherein a flexural modulus FM (GPa) of the resin composition, a mass fraction of the carbon fibers Wf(%) in the resin composition, and a tensile elastic modulus E (GPa) of the carbon fibers satisfy the relationships of the following Formulae (5) and (6):

$$FM/Wf^{0.5} > 6.8 \qquad \text{Formula (5)}$$

$$FM/Wf^{0.5} > 0.01 \times E + 3.00 \quad \text{Formula (6)}$$

12. The resin composition according to claim 11, wherein the mass fraction of the carbon fibers Wf is 15 to 55%.

13. The resin composition according to claim 11 or 12, wherein the flexural modulus FM is 41 to 55 GPa.

14. A molded article, obtained by molding the resin composition according to any one of claims 1 to 13.

**INTERNATIONAL SEARCH REPORT**

International application No.

PCT/JP2020/032339

A. CLASSIFICATION OF SUBJECT MATTER
B29B 11/16(2006.01)i; C08K 7/06(2006.01)i; C08L 101/00(2006.01)i; D01F 9/22(2006.01)i
FI: C08L101/00; C08K7/06; D01F9/22; B29B11/16
According to International Patent Classification (IPC) or to both national classification and IPC

B. FIELDS SEARCHED

Minimum documentation searched (classification system followed by classification symbols)
B29B11/16; C08K7/06; C08L101/00; D01F9/22

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2014-141762 A (TORAY INDUSTRIES, INC.) 07 August 2014 (2014-08-07) claims 5-8, paragraphs [0001]-[0004], [0018], [0077]-[0080], [0109], example 4, comparative examples 2, 6, 8, 9, 13, table 2 | 1-5, 7, 9-14<br>6, 8 |
| Y | WO 2012/117975 A1 (TORAY INDUSTRIES, INC.) 07 September 2012 (2012-09-07) example 1, paragraphs [0063]-[0066] | 6 |
| Y | JP 2009-197358 A (TORAY INDUSTRIES, INC.) 03 September 2009 (2009-09-03) claims, examples | 8 |
| Y | JP 2012-97386 A (TORAY INDUSTRIES, INC.) 24 May 2012 (2012-05-24) claims, examples | 8 |
| P, X | WO 2019/244830 A1 (TORAY INDUSTRIES, INC.) 26 December 2019 (2019-12-26) claims, examples | 1, 5, 8-10 |

☐ Further documents are listed in the continuation of Box C.   ☒ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>06 November 2020 (06.11.2020) | Date of mailing of the international search report<br>24 November 2020 (24.11.2020) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**
Information on patent family members

| International application No. |
|---|
| PCT/JP2020/032339 |

| Patent Documents referred in the Report | Publication Date | Patent Family | Publication Date |
|---|---|---|---|
| JP 2014-141762 A | 07 Aug. 2014 | (Family: none) | |
| WO 2012/117975 A1 | 07 Sep. 2012 | US 2013/0337253 A1 example 1, paragraphs [0097]-[0100] EP 2682248 A1 CN 103384588 A KR 10-2014-0006952 A | |
| JP 2009-197358 A | 03 Sep. 2009 | (Family: none) | |
| JP 2012-97386 A | 24 May 2012 | (Family: none) | |
| WO 2019/244830 A1 | 26 Dec. 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006001965 A
- JP 2018145292 A
- JP 2017190426 A
- JP 2019026808 A